Europäisches Patentamt

European Patent Office

Office européen des brevets

(11) Veröffentlichungsnummer: **0 520 346 A2**

## EUROPÄISCHE PATENTANMELDUNG

(21) Anmeldenummer: **92110452.7**

(22) Anmeldetag: **20.06.92**

(51) Int. Cl.$^5$: **C08F 10/02**, C08F 4/62

(30) Priorität: **28.06.91 DE 4121355**

(43) Veröffentlichungstag der Anmeldung:
**30.12.92 Patentblatt 92/53**

(84) Benannte Vertragsstaaten:
**AT BE DE DK ES FR GB NL SE**

(71) Anmelder: **BASF Aktiengesellschaft
Carl-Bosch-Strasse 38
W-6700 Ludwigshafen(DE)**

(72) Erfinder: **Müller, Hans-Joachim, Dr.
Pfortmüllerstrasse 52
W-6718 Grünstadt(DE)**
Erfinder: **Konrad, Rainer, Dr.**

**Gartenweg 7
W-6701 Goennheim(DE)**
Erfinder: **Schweier, Günther, Dr.
Friedrich-Pietzsch-Strasse 14
W-6701 Friedelsheim(DE)**
Erfinder: **Weber, Siegfried, Dr.
Peter-Nickel-Strasse 5
W-6940 Weinheim(DE)**
Erfinder: **Saive, Roland, Dr.
Pfarrer-Friedrich-Strasse 44
W-6700 Ludwigshafen(DE)**
Erfinder: **Koelle, Peter, Dr.
An der Froschlache 19
W-6700 Ludwigshafen(DE)**

(54) **Phillips-Katalysator und seine Verwendung zur Herstellung von Ethylenhomopolymerisaten und -copolymerisaten.**

(57) Ein neuer Phillips-Katalysator für die Homopolymerisation von Ethylen und die Copolymerisation von Ethylen mit $\alpha$-Olefinen enthält als katalytisch wirksame Komponenten einen speziellen Aluminiumphosphat geträgerten Chromkatalysator und Cokatalysatoren der allgemeinen Formel I bis IV,

$$MR \qquad M^1R_2 \qquad M^2R^1_{3-n}X_n \qquad MM^2RR^1_3 \qquad ,$$

$$(I) \qquad (II) \qquad (III) \qquad (IV)$$

worin der Index und die Variablen die folgende Bedeutung haben:
M       Lithium, Natrium und Kalium,
$M^1$      Magnesium und Zink,
$M^2$      Bor und Aluminium,
R       $C_1$- bis $C_{10}$-Alkyl und $C_6$- bis $C_{20}$-Aryl,
$R^1$      R und $C_1$- bis $C_{10}$-Alkoxy und $C_6$- bis $C_{20}$-Aryloxy,
X       Chlor, Brom und Jod,
n       0, 1 und 2;.
Der Aluminiumphosphat geträgerte Chromkatalysator ist erhältlich durch Auftragen von Chromverbindungen auf ein feinteiliges Aluminiumphosphat mit einem Molverhältnis P:Al nahe bei oder gleich 1 und einem Porenvolumen von > 1 $cm^3$/g und Aktivieren des hierbei resultierenden Zwischenprodukts bei höheren Temperaturen in einer oxidierenden Atmosphäre. Der neue Phillips-Katalysator weist eine ausgesprochene hohe mittlere Lebensdauer auf, und seine Produktivität kann durch die Zugabe von Wasserstoff noch gesteigert werden.

EP 0 520 346 A2

Die vorliegende Erfindung betrifft einen neuen Phillips-Katalysator für die Homopolymerisation von Ethylen und die Copolymerisation von Ethylen mit α-Olefinen, enthaltend als katalytisch wirksame Komponenten einen speziellen Aluminiumphosphat geträgerten Chrom-Katalysator und mindestens einen ausgewählten metallorganischen Cokatalysator.

Die gemeinsame Verwendung Aluminiumphosphat geträgerter Chromkatalysatoren und metallorganischer Cokatalysatoren für die Herstellung von Hompolymerisaten des Ethylens und Copolymerisaten des Ethylens mit α-Olefinen nach dem Phillips-Verfahren ist aus der US-A-4 364 842 bekannt. Für die Herstellung dieser bekannten Phillips-Katalysatoren geht man aus von nichtstöchiometrischen Aluminiumphosphaten mit einem Molverhältnis P:Al von < 1, wobei die Anwendung von Molverhältnissen P:Al zwischen 0,6 und 0,8 im Rahmen der Lehre der US-A-4 364 842 bevorzugt ist, weil die betreffenden Phillips-Katalysatoren aktiver als andere bekannte Phillips-Katalysatoren sind und Polymerisate mit einem vergleichsweise günstigen anwendungstechnischen Eigenschaftsprofil liefern. Die Porenvolumina der Aluminiumphosphate sind hierbei deutlich kleiner als 1 cm$^3$/g.

Diese bekannten Phillips-Katalysatoren enthalten des weiteren metallorganische Cokatalysatoren, wobei sich Trialkylborane, insbesondere Triethylboran, als besonders wirksam herausgestellt haben. Die Verwendung dieser Cokatalysatoren steigert die Empfindlichkeit der bekannten Phillips-Katalysatoren gegenüber der regelnden Wirkung von Wasserstoff. Wie die umfangreichen Untersuchungen der US-A-4 364 842 außerdem zeigen, reicht die Wirkung - sofern überhaupt vorhanden - von lithium-, magnesium-, aluminium-, antimon-, zinn- und zinkorganischen Cokatalysatoren nicht an die des Triethylborans heran. Außerdem wird noch ausdrücklich betont, daß Lithiumtetrabutylborat und Triphenylboran nur einen geringen Cokatalysator-Effekt bewirken. Bei der Weiterentwicklung der bekannten Phillips-Katalysatoren zieht der Fachmann deshalb diese Verbindungen nicht mehr als Cokatalysatoren in Betracht.

Die Phillips-Katalysatoren der US-A-4 364 842 erreichen zwar binnen weniger Minuten nach ihrer Dosierung in den Polymerisationsreaktor ihr Aktivitätsmaximum, indes ist ihre Aktivität schon nach vergleichsweise kurzer Polymerisationsdauer gegen Null gefallen. Dies ist insbesondere deswegen ein schwerwiegender Nachteil, weil die mittlere Lebens- oder Aktivitätsdauer der bekannten Phillips-Katalysatoren weit unter den gebräuchlichen durchschnittlichen Verweilzeiten eines Phillips-Katalysators in den üblichen und bekannten großtechnischen Schleifenreaktoren zur Herstellung von Ethylenhomopolymerisaten und -copolymerisaten liegt.

Aus der EP-A 0 215 336 ist dagegen ein Phillips-Katalysator auf der Basis von Aluminiumphosphat eines Molverhaltnisses P:Al nahe oder gleich 1 und eines Porenvolumens von > 1 cm$^3$/g, insbesondere > 1,3 cm$^3$/g, bekannt. Über die Mitverwendung von metallorganischen Cokatalysatoren läßt sich der EP-A 0 215 336 nichts entnehmen.

Auch dieser bekannte Phillips-Katalysator weist eine nachteilig kurze mittlere Lebens- bzw. Aktivitätsdauer auf. Außerdem ist er vergleichsweise unempfindlich gegenüber der regelnden Wirkung von Wasserstoff und er liefert nur Polymerisate mit ausgesprochen niedrigen Schmelzindices (Melt Index, MI, und High Load Melt Index, HLMI), was für die Verarbeitbarkeit der betreffenden Polymerisate äußerst nachteilig ist.

Ausgehend von der US-A-4 364 842 und der EP-A-0 215 336 stellt sich daher die Aufgabe, einen neuen, hochproduktiven Phillips-Katalysator zu finden, welcher die Nachteile des Standes der Technik nicht mehr länger aufweist, über einen deutlich längeren Zeitraum als bislang möglich katalytisch aktiv bleibt, sehr empfindlich gegenüber der regelnden Wirkung von Wasserstoff ist und mit dessen Hilfe sowohl nach dem Suspensionsverfahren als auch nach dem Gasphasenwirbelschichtverfahren in hoher Ausbeute Ethylenhomopolymerisate und -copolymerisate mit breit variierbarem Eigenschaftsprofil, insbesondere hinsichtlich der Molmassenverteilung und der Schmelzindices, hergestellt werden können. Außerdem soll die Produktivität des neuen Phillips-Katalysators bei der Zugabe von Wasserstoff nicht mehr absinken, ganz im Gegenteil soll sie dadurch noch weiter gesteigert werden.

Diese Aufgaben konnten elegant und wirkungsvoll durch einen neuen Phillips-Katalysator gelöst werden, welcher als katalytisch wirksame Komponenten einen speziellen Aluminiumphosphat geträgerten Chromkatalysator auf der Basis eines Aluminiumphosphats von nahezu stöchiometrischer oder völlig stöchiometrischer Zusammensetzung und von hoher Porengröße sowie speziell ausgewählte metallorganische Cokatalysatoren enthält. Im Hinblick auf den Stand der Technik war es nicht zu erwarten gewesen, daß gerade die Kombination aus dem speziellen Aluminiumphosphat geträgerten Chromkatalysator und den ausgewählten metallorganischen Cokatalysatoren die der Erfindung zugrundeliegenden Aufgaben lösen konnte.

Demgemäß handelt es sich bei dem Gegenstand der vorliegenden Erfindung um einen neuen Phillips-Katalysator für die Homopolymerisation von Ethylen und die Copolymerisation von Ethylen mit α-Olefinen, enthaltend als katalytisch wirksame Komponenten

A) einen Aluminiumphosphat geträgerten Chromkatalysator, erhältlich durch Auftragen von Chromverbin-

2

dungen auf ein feinteiliges Aluminiumphosphat mit einem Molverhältnis P:Al nahe bei oder gleich 1 und einem Porenvolumen von > 1 $cm^3/g$ und Aktivieren des hierbei resultierenden Zwischenproduktes bei höheren Temperaturen in einer oxidierenden Atmosphäre,
und

B) mindestens eine Verbindung der allgemeinen Formeln I bis IV,

$$MR \qquad M^1R_2 \qquad M^2R^1{}_{3-n}X_n \qquad MM^2RR^1{}_3 \qquad ,$$

$$(I) \qquad (II) \qquad (III) \qquad (IV)$$

worin der Index und die Variablen die folgende Bedeutung haben:

M       Lithium, Natrium und Kalium,
$M^1$      Magnesium und Zink,
$M^2$      Bor und Aluminium,
R       $C_1$- bis $C_{10}$-Alkyl und $C_6$- bis $C_{20}$-Aryl,
$R^1$      R und $C_1$- bis $C_{10}$-Alkoxy und $C_6$- bis $C_{20}$-Aryloxy,
X       Chlor, Brom und Jod,
n       0, 1 und 2;
als Cokatalysator.

Im folgenden wird der neue Phillips-Katalysator für die Homopolymerisation von Ethylen und die Copolymerisation von Ethylen mit α-Olefinen der Kürze halber als "erfindungsgemäßer Phillips-Katalysator" bezeichnet.

Die eine wesentliche katalytisch aktive Komponente des erfindungsgemäßen Phillips-Katalysators ist ein Aluminiumphosphat geträgerter Chromkatalysator (A), welcher in an sich bekannter Weise durch Auftragen von Chromverbindungen auf ein feinteiliges Aluminiumphosphat und durch Aktivieren des hierbei resultierenden Zwischenproduktes bei höheren Temperaturen in einer oxidierenden Atmosphäre erhältlich ist.

Für den erfindungsgemäßen Phillips-Katalysator ist es indes wesentlich, daß das feinteilige Aluminiumphosphat ein Molverhältnis P:Al nahe bei oder gleich 1 und ein Porenvolumen von > 1 $cm^3/g$ aufweist. Das heißt, das erfindungsgemäß zu verwendende Aluminiumphosphat ist von nahezu stöchiometrischer oder stöchiometrischer Zusammensetzung. Hierbei ist es erfindungsgemäß von Vorteil, wenn das Molverhältnis P:Al oberhalb 0,8:1 liegt. Weitere Vorteile ergeben sich für den erfindungsgemäßen Phillips-Katalysator und die hiermit hergestellten (Co)Polymerisate, wenn das Molverhältnis von P:Al > 0,95:1 ist. Erfindungsgemäß ist das Molverhältnis P:Al von 1:1 ganz besonders vorteilhaft und wird deshalb ganz besonders bevorzugt bei der Herstellung der erfindungsgemäßen Phillips-Katalysatoren eingehalten.

Für den erfindungsgemäßen Phillips-Katalysator ist es außerdem wesentlich, daß das feinteilige Aluminiumphosphat ein Porenvolumen von > 1 $cm^3/g$ aufweist. Hat das Aluminiumphosphat ein kleineres Porenvolumen, stellen sich die erfindungsgemäß zu erzielenden Vorteile nicht mehr länger ein. Wenn dagegen bei der Herstellung des erfindungsgemäßen Phillips-Katalysators Aluminiumphosphat mit einem Porenvolumen von > 1 $cm^3/g$, insbesondere > 1,3 $cm^3/g$, verwendet wird, hat dies sowohl für den erfindungsgemäßen Phillips-Katalysator als auch für die hiermit hergestellten (Co)Polymerisate besondere Vorteile. Erfindungsgemäß werden deshalb feinteilige Aluminiumphosphate mit Porenvolumina von > 1,3 $cm^3/g$ ganz besonders bevorzugt angewandt.

Hervorragende erfindungsgemäße Phillips-Katalysatoren werden bei der Verwendung von feinteiligem Aluminiumphosphat mit einem Molverhältnis P:Al = 1 und einem Porenvolumen von > 1,3 $cm^3/g$ erhalten.

Die erfindungsgemäß zu verwendenden Aluminiumphosphate sind an sich bekannte Verbindungen und werden beispielsweise durch Neutralisation saurer wäßriger Lösungen von Aluminium- und Phosphationen hergestellt. Die Neutralisation wird hierbei so durchgeführt, daß sich ein Hydrogel bildet. Dieses kann durch azeotrope Destillation oder durch Auswaschen mit einem flüchtigen, mit Wasser mischbaren Lösungsmittel getrocknet werden. Daneben können aber auch übliche und bekannte Methoden wie z.B. die Sprühtrocknung oder Ofentrocknung angewandt werden. Durch die Trocknung resultiert ein sogenanntes Aluminiumphosphat-Xerogel, welches der Träger für den Chromkatalysator ist.

Bekanntermaßen können in dieses Xerogel bei seiner Herstellung durch Cofällung Silizium-, Eisen- und/oder Borverbindungen eingebaut werden. Außerdem können auch noch Phosphorverbindungen wie z.B. Triethylphosphat zugemischt werden.

Für das Auftragen der Chromverbindung auf das vorstehend im Detail beschriebene Aluminiumphosphat eignen sich vorzugsweise wasser- und alkohollösliche Chromverbindungen wie Chrom(III)nitrat, Chrom(III)-acetat oder Chrom(VI)oxid. Hierbei können diese Chromverbindungen in wäßriger Lösung auf das Hydrogel aufgebracht werden. Außerdem können kohlenwasserstofflöslichen Chromverbindungen aus nichtwäßrigen Lösungen auf das Xerogel aufgetragen werden. Ein Beispiel für eine solche in Kohlenwasserstoffen lösliche Chromverbindung ist tert.-Butylchromat. Des weiteren kann das katalytisch wirksame Chrom bereits bei der Herstellung des Aluminiumphosphat-Hydrogels beispielsweise durch Cofällung in den Träger eingebracht werden.

Unabhängig davon nach welcher Methode der Chromkatalysator auf das vorstehend im Detail beschriebene Aluminiumphosphat aufgebracht wird, liegt der Chromgehalt, bezogen auf das Aluminiumphosphat, zwischen 0,01 und 10 Gew.-%. Werden weniger als 0,01 Gew.-% an Chrom verwendet, läßt die katalytische Wirksamkeit des betreffenden Phillips-Katalysators stark zu wünschen übrig. Dagegen rechtfertigt die weitere Steigerung der katalytischen Aktivität nicht die Erhöhung des Gehalts über 10 Gew.-% hinaus. Demnach handelt es sich bei dem Gewichtsbereich von 0,01 bis 10 Gew.-% um einen optimalen Bereich, innerhalb dessen der Chromgehalt des Aluminiumphosphats breit variiert und den gegebenen technischen Bedingungen einerseits und dem gewünschten Eigenschaftsprofil der (Co)Polymerisate andererseits angepaßt werden kann. Innerhalb dieses optimalen Bereichs ist derjenige von 0,1 bis 5 Gew.-% Chrom hervorzuheben, weil erfindungsgemäße Phillips-Katalysatoren eines solchen Chromgehaltes besonders vorteilhaft sind. Als ganz besonders vorteilhaft erweisen sich die erfindungsgemäßen Phillips-Katalysatoren, deren Aluminiumphosphat geträgter Chromkatalysator 0,5 bis 1,5 Gew`-%, insbesondere 1 Gew.-% Chrom enthält.

Bei der Herstellung des erfindungsgemäßen Phillips-Katalysators wird das vorstehend im Detail beschriebene chromhaltige Zwischenprodukt bei höheren Temperaturen in einer oxidierenden Atmosphäre aktiviert, wodurch der erfindungsgemäß zu verwendende Aluminiumphosphat geträgerte Chromkatalysator (A) resultiert. Methodisch gesehen weist dieser Aktivierungsschritt keine Besonderheiten auf, sondern er kann in üblicher und bekannter Weise durch Erhitzen des Zwischenproduktes auf Temperaturen von 300 bis 900, vorzugsweise 500 bis 750°C erfolgen. Bekanntermaßen wird hierbei das Zwischenprodukt in einer oxidierenden Atmosphäre erhitzt. Beispiele geeigneter oxidierender Atmosphären sind reiner Sauerstoff, Sauerstoff-Edelgas-Gemische und Luft, von denen Luft aus Gründen der Wirtschaftlichkeit bevorzugt verwendet wird. Im allgemeinen liegt die Aktivierungszeit bei 30 Minuten bis 24 Stunden, wobei eine Dauer von 1 bis 4 Stunden von Vorteil ist. Beispiele für besonders gut geeignete erfindungsgemäß zu verwendende Aluminiumphosphat geträgerte Chromkatalysatoren (A) sowie vorteilhafte Verfahren zu deren Herstellung, sind aus der EP-A-0 215 336 bekannt.

Der weitere wesentliche Bestandteil des erfindungsgemäßen Phillips-Katalysators ist mindestens ein Cokatalysator (B) der allgemeinen Formeln I bis IV.

In der allgemeinen Formel I bezeichnet die Variable M Lithium, Natrium und Kalium, von denen Lithium von Vorteil ist. Die Variable R steht für $C_1$ - bis $C_{10}$-Alkyl oder $C_6$- bis $C_{20}$-Aryl, insbesondere für $C_1$- bis $C_6$-Alkyl und Phenyl.

In der allgemeinen Formel II bezeichnet die Variable $M^1$ Magnesium und Zink, von denen Magnesium vorteilhaft ist. Hierbei hat die Variable R die vorstehend angegebene Bedeutung.

In der allgemeinen Formel III bezeichnet die Variabele $M^2$ Bor und Aluminium, von denen Bor vorteilhaft ist. Die Variable $R^1$ hat die Bedeutung der Variable R oder sie bezeichnet $C_1$- bis $C_{10}$-Alkoxy und $C_6$- bis $C_{20}$-Aryloxy. Vorteilhafterweise bezeichnet die Variable $R^1$ $C_1$- bis $C_6$-Alkyl, Phenyl, $C_1$- bis $C_6$-Alkoxy oder Phenoxy. Die Variable X steht für Chlor, Brom und Jod, insbesondere Chlor. Der Index n ist gleich 0 oder gleich 1 oder 2.

Beispiele gut geeigneter erfindungsgemäß anzuwendender Cokatalysatoren (B) sind $C_1$ - bis $C_6$-Alkyllithium, Di- ($C_1$- bis $C_6$-alkyl)magnesium, Di-($C_1$- bis $C_6$-alkyl)zink, Tri-($C_1$- bis $C_6$-alkyl)boran, Tri-($C_1$- bis $C_6$-alkyl)borat, Triphenylboran, Triphenylborat, Di-($C_1$- bis $C_6$-alkyl)($C_1$- bis $C_6$-alkoxy)-, Di-($C_1$- bis $C_6$-alkyl)phenyl-, Di- ($C_1$- bis $C_6$-alkoxy)($C_1$- bis $C_6$-alkyl)-, Di-($C_1$- bis $C_6$-alkoxy)phenyl-, ($C_1$- bis $C_6$-Alkyl)-diphenyl- und/oder ($C_1$- bis $C_6$-Alkoxy)diphenylboran, Tri-($C_1$- bis $C_6$-alkyl)aluminium, Di-($C_1$- bis $C_6$-alkyl)-aluminium($C_1$- bis $C_6$-alkoxid), Di-($C_1$- bis $C_6$-alkyl)aluminiumchlorid und/oder ($C_1$- bis $C_6$-Alkyl)-aluminiumdichlorid.

Beispiele besonders gut geeigneter Cokatalysatoren (B) der allgemeinen Formeln I bis III sind Butyllithium, Di-n-butylmagnesium, Ethyldichlorboran, Diethylborethoxid, Triethylboran, Diethylaluminiumchlorid, Diethylaluminiumethoxid, Ethylaluminiumdichlorid und Triethylaluminium, von denen n-Butyllithium und Triethylboran ganz besonders vorteilhaft sind und deswegen auch ganz besonders bevorzugt angewandt werden.

In der allgemeinen Formel IV haben die Variablen M, $M^1$, $M^2$, R und $R^1$ die vorstehend im Detail angegebene Bedeutung. Beispiele ganz besonders vorteilhafter Cokatalysatoren der allgemeinen Formel IV sind Lithiumtetra-n-butylborat und Lithiumtriethyl-n-butylborat, von denen letzteres besonders vorteilhaft ist

EP 0 520 346 A2

und deshalb ganz besonders bevorzugt angewandt wird.

Für den erfindungsgemäßen Phillips-Katalysator ergeben sich aus der gemeinsamen Verwendung der Cokatalysatoren (B) der allgemeinen Formeln I und III, worin der Index n = 0 ist, oder aus der Verwendung der Cokatalysatoren (B) der allgemeinen Formel IV weitere besondere Vorteile. Vorzugsweise werden hierbei mindestens eine der vorstehend beschriebenen lithiumorganischen Verbindungen der allgemeinen Formeln I und mindestens eine der Borverbindungen der allgemeinen Formel III verwendet. Erfindungsgemäß ist es von besonderem Vorteil, wenn das Molverhältnis B:Li bei 4:1 bis 1:4, vorzugsweise 3:1 bis 1:3 und insbesondere 2:1 bis 1:2 liegt. Bei der Verwendung von Cokatalysatoren (B) der allgemeinen Formel IV liegt dieses Verhältnis bei 1:1.

Bei dem erfindungsgemäßen Phillips-Katalysator kann das molare Verhältnis von Aluminiumphosphat geträgertem Chromkatalysator zu Cokatalysator (B) breit variiert werden. Dies eröffnet die Möglichkeit, den erfindungsgemäßen Phillips-Katalysator den jeweiligen apparativen Bedingungen einerseits und dem gewünschten Eigenschaftsprofil der (Co)Polymerisate andererseits anzupassen. Werden indes die vorstehend beschriebenen Borverbindungen der allgemeinen Formeln III oder IV angewandt, ist ein molares Verhältnis Cr:B von 1:1 bis 1:10, insbesondere 1:2 bis 1:6, von Vorteil. Werden die vorstehend beschriebenen Gemische aus lithiumorganischen Verbindungen der allgemeinen Formel I und Borverbindungen der allgemeinen Formel III oder die lithium- und bororganischen Verbindungen der allgemeinen Formel IV angewandt, liegt das molare Verhältnis Chrom:Bor:Lithium vorteilhafterweise im Bereich von 1:2:0,25 bis 1:6:24, insbesondere 1:3:3 bis 1:5:5.

Die vorstehend im Detail beschriebenen Cokatalysatoren (B) können vor der eigentlichen (Co)-Polymerisation in Form einer Lösung oder einer Suspension zu dem aktivierten Aluminiumphosphat geträgerten Chromkatalysator (A) zugegeben werden. Es ist indes von Vorteil, die metallorganischen Cokatalysatoren (B) direkt in den jeweils verwendeten Polymerisationsreaktor einzudosieren.

Vor der Zugabe der metallorganischen Cokatalysatoren (B) kann der aktivierte Aluminiumphosphat geträgerte Chromkatalysator (A) auch noch durch Ethylen und/oder α-Olefine, Kohlenmonoxid oder Triethylboran reduziert werden.

Der erfindungsgemäße Phillips-Katalysator eignet sich hervorragend für die Herstellung von Homopolymerisaten des Ethylens und Copolymerisaten des Ethylens mit α-Olefinen nach den Phillips-Verfahren. Hierbei kommen als Polymerisationsreaktoren die üblichen und bekannten Schleifenreaktoren, Autoklaven und Gasphasenwirbelschichtreaktoren in Betracht.

Beispiele für geeignete Comonomere, welche mit Ethylen copolymerisiert werden können, sind Prop-1-en, But-1-en, Pent-1-en, Hex-1-en und Oct-1-en sowie die konjugierten und nichtkonjugierten Diolefine, Butadien, Penta-1,3-dien, 2,3-Dimethylbutadien, Penta-1,4-dien, Hexa-1,5-dien und Vinylcyclohexen. Im allgemeinen werden die Comonomere dem Ethylen in einer solchen Menge zugesetzt, daß Ethylencopolymerisate aus 96 bis 99,8 Gew.-% an einpolymerisiertem Ethylen und 0,2 bis 4 Gew.-% mindestens eines einpolymerisierten Comonomeren entstehen.

Der erfindungsgemäße Phillips-Katalysator weist besondere unerwartete Vorteile auf. So ist er ausgesprochen empfindlich gegenüber der Reglerwirkung von Wasserstoff. Hierin unterscheidet er sich nicht von bekannten Phillips-Katalysatoren, wie sie beispielsweise in der US-A-4 364 842 beschrieben werden. Allerdings bewirkt die Zudosierung von Wasserstoff bei den bekannten Phillips-Katalysatoren eine deutliche Absenkung ihrer Produktivität. Dagegen wird bei dem erfindungsgemäßen Phillips-Katalysator die Produktivität durch Wasserstoff überraschenderweise ganz erheblich gesteigert. Der erfindungsgemäße Phillips-Katalysator eignet sich insbesondere hervorragend für die Homo- und Copolymerisation des Ethylens nach den üblichen und bekannten particle-form-Verfahren in einer Suspension aus einem gesättigten Kohlenwasserstoff und Ethylen unter einem Druck von 20 bis 50, insbesondere 40 bar und Temperaturen von 90 bis 110 °C.

Beispiele 1 bis 4

Die Herstellung von Ethylenhomopolymerisaten mit Hilfe erfindungsgemäßer Phillips-Katalysatoren

Für die Beispiele 1 bis 4 wurde ein Aluminiumphosphat geträgerter Chromkatalysator (A) nach dem folgenden Verfahren hergestellt:

250 g Aluminiumphosphat eines Molverhältnisses P:Al von 1:1 und eines Porenvolumens von 1,36 $cm^3$/g wurden in 1,5 ml Methanol suspendiert. Zu der resultierenden Suspension wurden 150 ml einer methanolischen $Cr(NO)_3 \cdot 9 H_2O$-Lösung, welche 18 g des Salzes enthielt, gegeben. Nach 10-minütigem Rühren war die Suspension weitgehend farblos, wonach das Wasser und das Methanol im Vakuum abdestilliert wurden. Die oxidative Aktivierung des hierbei erhaltenen Zwischenproduktes wurde in einem Luftstrom bei 650 °C während 2 Stunden in einem Wirbelschichtaktivator durchgeführt. Der hierbei erhaltene Aluminiumphosphat geträgerte Chromkatalysator (A) wurde für die Polymerisationsversuche der Beispiele 1 bis 4 verwendet.

Die Polymerisation gemäß den Beispielen 1 bis 4 wurde nach der folgenden allgemeinen Vorschrift durchgeführt:

Als Reaktionsgefäß wurde ein 1 l-Druckautoklav verwendet. Dieser wurde auf 95°C aufgeheizt und mehrmals mit Ethylen gespült. Unter Rühren wurden sodann 500 ml Isobutan und eine Suspension des jeweils verwendeten Cokatalysators (B) in 1,5 ml Heptan in den Autoklaven eindosiert. Nach Erreichen der gewünschten Polymerisationstemperatur von 95°C wurde eine bestimmte Menge des oben beschriebenen erfindungsgemäß zu verwendenden Aluminiumphosphat geträgerten Chromkatalysators (A) mit Ethylen eines Druckes von 25 bar in den Reaktor hineingedrückt. Hiernach wurde weiter Ethylen zugegeben, bis der Polymerisationsdruck von 40 bis 42 bar erreicht wurde. Während der Polymerisation wurde der Druck im Autoklaven durch Nachdosieren von Ethylen in diesem Druckbereich gehalten. Die Polymerisation wurde nach einer Reaktionszeit von 90 Minuten durch Entspannen abgebrochen.

Die Tabelle gibt Auskunft über die Menge und die Zusammensetzung der angewandten erfindungsgemäßen Phillips-Katalysatoren und andere wesentliche Verfahrensparameter. Außerdem gibt die Tabelle einen Überblick über die Ausbeute und die Eigenschaften der mit Hilfe der erfindungsgemäßen Phillips-Katalysatoren erhaltenen Ethylenhomopolymerisate.

Hierbei wurde der High Load Melt Index (HLMI) nach DIN 53 735 bei 190°C und einer Auflagekraft von 21,6 kp, der Schmelzindex MI nach DIN 53 735 bei 190°C und einer Auflagekraft von 2,16 kp, die Dichte nach DIN 53 479, der Staudinger Index nach DIN 53 728 und das massenmittlere Molekulargewicht $\overline{M}_w$ gelpermeationschromatographisch bestimmt.

Die Tabelle zeigt, daß die Produktivität des erfindungsgemäßen Phillips-Katalysators durch die Zugabe von Wasserstoff gesteigert werden kann. Außerdem belegt sie, daß die Gemische aus lithium- und bororganischen Cokatalysatoren (B) hinsichtlich der Steigerung der Produktivität und der Verbesserung des Eigenschaftsprofils der Polymerisate ganz besonders vorteilhafte Wirkungen zeigen.

Tabelle: Die Homopolymerisation von Ethylen mit Hilfe erfindungsgemäßer Phillips-Katalysatoren und die Eigenschaften der hierbei erhaltenen Homopolymerisate (Beispiele 1 bis 4)

| Beispiel Nr. | | 1 | 2 | 3 | 4 |
|---|---|---|---|---|---|
| **Phillips-Katalysator:** | | | | | |
| Komponente (A) | (mg) | 36 | 27,5 | 22 | 22 |
| 1. Komponente (B) Verbindung | (mg) | 0,298 TEB[a] | 0,207 TEB[a] | 0,265 TEB[a] | 0,165 TEB[a] |
| 2. Komponente (B) Verbindung | (mg) | - - | 0,137 Buli[b] | - - | 0,109 Buli[b] |
| Molverhältnis Cr:B | | 1:4 | - | 1:4 | - |
| Molverhältnis Cr:B:Li | | - | 1:4:4 | - | 1:4:4 |
| Wasserstoff | (ml) | - | - | 80 | 80 |
| mittlere Lebensdauer | (min) | ca. 20 | ca. 60 | ca. 30 | ca. 90 |
| Abnahme der Aktivität des Katalysators im Verlauf der Polymerisation | | rasch | langsam | rasch | langsam |
| Produktivität (g Polyethylen/g Katalysator) | | 2330 | 5160 | 2900 | 7600 |
| **Ethylenhomopolymerisat:** | | | | | |
| high load melt index HLMI | (g/10 min) | 490 | 99 | 397 | 298 |
| Schmelzindex MI | (g/10 min) | 8,1 | 0,2 | 5,1 | 3,2 |
| Dichte | (g/cm$^3$) | 0,968 | 0,964 | 0,966 | 0,966 |
| $\overline{M}_w$ | | $1{,}04 \cdot 10^5$ | $1{,}88 \cdot 10^5$ | $8{,}9 \cdot 10^4$ | $1{,}27 \cdot 10^5$ |
| $\overline{M}_w / \overline{M}_n$ | | 14 | 25 | 11 | 14 |
| Staudinger-Index Jg | (cm$^3$/g) | 140 | 230 | 150 | 170 |

[a] TEB = Triethylboran
[b] Buli = n-Butyllithium

## Patentansprüche

1. Phillips-Katalysator für die Homopolymerisation von Ethylen und die Copolymerisation von Ethylen mit α-Olefinen, enthaltend als katalytisch wirksame Komponenten

   A) einen Aluminiumphosphat geträgerten Chromkaralysator, erhältlich durch Auftragen von Chromverbindungen auf ein feinteiliges Aluminiumphosphat mit einem Molverhältnis P:Al nahe bei oder gleich 1 und einem Porenvolumen von > 1 cm$^3$/g und Aktivieren des hierbei resultierenden Zwischenproduktes bei höheren Temperaturen in einer oxidierenden Atmosphäre, und

   B) mindestens eine Verbindung der allgemeinen Formeln I bis IV,

$$\mathrm{MR} \qquad \mathrm{M^1R_2} \qquad \mathrm{M^2R^1_{3-n}X_n} \qquad \mathrm{MM^2RR^1_3} \qquad ,$$

$$(\,I\,) \qquad (\,I\,I\,) \qquad (\,I\,I\,I\,) \qquad (\,I\,V\,)$$

worin der Index und die Variablen die folgende Bedeutung haben:

| | |
|---|---|
| M | Lithium, Natrium und Kalium, |
| $M^1$ | Magnesium und Zink, |
| $M^2$ | Bor und Aluminium, |
| R | $C_1$- bis $C_{10}$-Alkyl und $C_6$- bis $C_{20}$-Aryl, |
| $R^1$ | R und $C_1$- bis $C_{10}$-Alkoxy und $C_6$- bis $C_{20}$-Aryloxy, |
| X | Chlor, Brom und Jod, |
| n | 0, 1 und 2; |

als Cokatalysator.

2. Der Phillips-Katalysator nach Anspruch 1, dadurch gekennzeichnet, daß das Molverhältnis P:Al oberhalb 0,8:1 liegt.

3. Der Phillips-Katalysator nach Anspruch 2, dadurch gekennzeichnet, daß das Molverhältnis P:Al > 0,95:1 ist.

4. Der Phillips-Katalysator nach Anspruch 2 oder 3, dadurch gekennzeichnet, daß das Porenvolumen des feinteiligen Aluminiumphosphats > 1,3 cm$^3$/g ist.

5. Der Phillips-Katalysator nach einem der Ansprüche 1 bis 4, dadurch gekennzeichnet, daß man als Cokatalysatoren (B) mindestens eine Verbindung der allgemeinen Formeln I bis IV verwendet, worin die Variablen M, R, $R^1$ und X die folgende Bedeutung haben:

| | |
|---|---|
| M | Lithium, |
| R | $C_1$- bis $C_6$-Alkyl und Phenyl, |
| R' | $C_1$ - bis $C_6$-Alkyl, Phenyl, $C_1$- bis $C_6$-Alkoxy und Phenoxy, |
| X | Chlor. |

6. Der Phillips-Katalysator nach einem der Ansprüche 1 bis 5, dadurch gekennzeichnet, daß man als Cokatalysatoren (B) $C_1$- bis $C_6$-Alkyllithium, Di-($C_1$- bis $C_6$-alkyl)magnesium, Di-($C_1$- bis $C_6$-alkyl)zink, Tri-($C_1$- bis $C_6$-alkyl)boran, Tri-($C_1$- bis $C_6$-alkyl)borat, Triphenylboran, Triphenylborat, Di-($C_1$- bis $C_6$-alkyl)($C_1$- bis $C_6$-alkoxy)-, Di-($C_1$- bis $C_6$-alkyl)phenyl-, Di-($C_1$- bis $C_6$-alkoxy)($C_1$- bis $C_6$-alkyl)-, Di-($C_1$ - bis $C_8$-alkoxy)phenyl-, ($C_1$- bis $C_6$-Alkyl)diphenyl- und/oder ($C_1$-bis $C_6$-Alkoxy)diphenylboran, Tri-($C_1$- bis $C_6$-alkyl)aluminium, Di-($C_1$- bis $C_6$-alkyl)aluminium($C_1$- bis $C_6$-alkoxid), Di-($C_1$- bis $C_6$-alkyl)-aluminiumchlorid und/oder ($C_1$- bis $C_6$-Alkyl)aluminiumdichlorid verwendet.

7. Der Phillips-Katalysator nach einem der Ansprüche 1 bis 6, dadurch gekennzeichnet, daß man als Cokatalysator (B) Triethylboran verwendet.

8. Der Phillips-Katalysator nach einem der Ansprüche 1 bis 6, dadurch gekennzeichnet, daß man als Cokatalysator (B) Triethylboran und Butyllithium im Molverhältnis von 4:1 bis 1:4 verwendet.

9. Verfahren zur Herstellung von Ethylenhomopolymerisaten oder -copolymerisaten mit $\alpha$-Olefinen durch Polymerisation von Ethylen oder von Gemischen aus Ethylen und $\alpha$-Olefinen mit Hilfe von Phillips-Katalysatoren, dadurch gekennzeichnet, daß man hierbei Phillips-Katalysatoren gemäß einem der Ansprüche 1 bis 8 verwendet.

10. Das Verfahren nach Anspruch 9, dadurch gekennzeichnet, daß man in der Gegenwart von Wasserstoff (co)polymerisiert.